# EUROPÄISCHE PATENTANMELDUNG

(11) **EP 1 933 078 A2**
(43) Veröffentlichungstag der Anmeldung: **18.06.2008**
(21) Anmeldenummer: 07023913.2
(22) Anmeldetag: 11.12.2007
(51) Int. Cl.: F16P 3/02

(54) **Einrichtung zur Bewegungsstabilisierung einer Schutzabdeckung**

(30) Priorität: 15.12.2006 DE 102006059795
(71) Anmelder: HEMA Maschinen- und Apparateschutz GmbH, 63500 Seligenstadt (DE)
(72) Erfinder: Willand, Thorsten, 64832 Babenhausen (DE); Friedel, Werner, 06120 Halle (DE)
(74) Vertreter: Schumacher, Bernd

(57) **Zusammenfassung**

Die Erfindung betrifft eine Einrichtung zur Bewegungsstabilisierung einer langen, schnellbeweglichen, längenveränderlichen Schutzabdeckung (10) beliebiger Breite mit einem stationären Abdeckungsende (14) und einem angetriebenen beweglichen Abdeckungsende (12). Zum Vermeiden von schwingungstechnischen Instabilitäten wird erfindungsgemäß vorgeschlagen, daß die Einrichtung als ein in Längsrichtung (L) der Schutzabdeckung (10) schnellwirkender separater Positionierantrieb (20) ausgebildet ist, daß der Positionierantrieb (20) eingangsseitig direkt oder indirekt mit dem angetriebenen beweglichen Abdeckungsende (12) positionserfassend gekoppelt ist, daß der Positionierantrieb (20) ausgangsseitig nur mit zumindest einer zwischen den Abdeckungsenden (12,14) der Schutzabdeckung (10) befindlichen definierten Angriffsstelle derselben mechanisch antreibend direkt oder indirekt verbunden ist und daß der Positionierantrieb (20) jede definierte Angriffsstelle in Abhängigkeit von der jeweiligen Position des beweglichen Abdeckungsendes (12,14) stets so positioniert, daß das Verhältnis des Abstandes jeder definierten Angriffsstelle von einem Abdeckungsende (12,14) zum gegenseitigen Abstand zwischen den Abdeckungsenden (12,14) bewegungs- bzw. geschwindigkeitsunabhängig konstant bleibt.

## Beschreibung

Die Erfindung betrifft eine Einrichtung zur Bewegungsstabilisierung einer langen, schnellbeweglichen, längenveränderlichen Schutzabdeckung beliebiger Breite mit einem stationären Abdeckungsende und einem angetriebenen beweglichen Abdekkungsende,

Derartige längenveränderliche Schutzabdeckungen werden vielfach zum Schützen von Maschinenteilen, wie solchen von Werkzeugbearbeitungsmaschinen, eingesetzt und können beispielsweise als flexible Faltenbälge mit oder ohne sich überlappende metallische Schutzlamellen oder als teleskopische Metallabdeckungen ausgebildet sein. Moderne Betriebsabläufe erfordern vielfach ständig größer werdende Arbeitsgeschwindigkeiten (von beispielsweise bis zu 120 Metern pro Minute) und Hubbewegungen (von beispielsweise bis zu 7 Metern), was insbesondere bei langen Schutzabdeckungen zum Teil zu erheblichen masse- bzw. trägheitsbedingten Schwingungsproblemen und damit zusammenhängenden Instabilitätsproblemen ihrer einzelnen Abdeckungsbereiche führt.

Zum Erzielen verbesserter Bewegungsabläufe von Schutzabdeckungen ist es allgemein bekannt, diese beispielsweise mit längenveränderlichen Stabilisierungsscheren auszurüsten. Diese sollen für ein gleichmäßiges Verlängern und Verkürzen der gesamten Schutzabdeckung und ihrer Einzelbereiche sorgen. Bei relativ kurzen Schutzabdeckungen mit nicht allzu schnellen verlängernden Auszieh- und verkürzenden Rückbewegungen des angetriebenen Abdeckungsendes können solche Stabilisierungsscheren wirksam eingesetzt werden, da das hierdurch bedingte zusätzliche Gewicht und eine relativ kleine Anzahl von Scherengelenken noch akzeptabel sind. Allerdings müssen solche Schutzabdeckungen zur Aufnahme der Stabilisierungsscheren eine ausreichende Breite haben. Mit größer werdender Länge und Hubfrequenz von Schutzabdeckungen ergeben sich aber erhebliche Probleme infolge unvermeidbarer, sich aufsummierender Bewegungstoleranzen (Spiel) der dann zahlreichen Bewegungsgelenke der Stabilisierungsscheren, was in Verbindung mit dem zunehmenden massebedingten Trägheitsverhalten den Einsatzbereich derartig stabilisierter Schutzabdeckungen äußerst stark einengt. Außerdem müssen derartige Schutzabdeckungen eine zur Aufnahme der Scheren ausreichende Mindestbreite haben.

Der vorliegenden Erfindung liegt die Aufgabe zugrunde, eine bewegungsstabilisierende Einrichtung für praktisch beliebige längenveränderliche Schutzabdeckungen so auszubilden, daß auf einfache und kostengünstige Weise ein problemloser störungsfreier Betrieb auch bei besonders langen und schnellbeweglichen längenveränderlichen Schutzabdeckungen beliebiger Breite möglich ist.

Zur Lösung der gestellten Aufgabe zeichnet sich eine Einrichtung der im Oberbegriff von Anspruch 1 genannten Art erfindungsgemäß durch die im Kennzeichen dieses Anspruchs aufgeführten Merkmale aus, nämlich dadurch, daß die Einrichtung als ein in Längsrichtung der Schutzabdeckung schnellwirkender separater Positionierantrieb ausgebildet ist, daß der Positionierantrieb eingangsseitig direkt oder indirekt mit dem angetriebenen beweglichen Abdeckungsende positionserfassend gekoppelt ist, daß der Positionierantrieb ausgangsseitig nur mit zumindest einer zwischen den Abdekkungsenden der Schutzabdeckung befindlichen definierten Angriffsstelle derselben mechanisch antreibend direkt oder indirekt verbunden ist und daß der Positionierantrieb jede definierte Angriffsstelle in Abhängigkeit von der jeweiligen Position des beweglichen Abdeckungsendes stets so positioniert, daß das Verhältnis des Abstandes jeder definierten Angriffsstelle von einem Abdeckungsende zum gegenseitigen Abstand zwischen den Abdeckungsenden bewegungs- bzw. geschwindigkeitsunabhängig konstant bleibt.

Mit dieser relativ einfachen Maßnahme kann eine längere schnellbewegliche Schutzabdeckung, die sonst zu Schwingungsinstabilitäten neigt, durch den mechanischen Positionierungseingriff an der wenigstens einen Angriffsstelle schwingungstechnisch in wenigstens zwei kürzere schwingungsunkritische Teilbereiche unterteilt werden. Die Bauart und Baubreite der Schutzabdeckung sind dabei grundsätzlich beliebig. Dadurch können praktisch beliebig lange Schutzabdeckungen gebaut und ohne Schwingungsgefahr sehr schnell angetrieben werden. Das gilt auch für scherenlose schmale Schutzabdeckungen.

Eine bevorzugte weitere Ausbildung gemäß Anspruch 2 mit nur einer mittigen Angriffsstelle ist besonders einfach und für die meisten Anwendungsfälle auch ausreichend. Für besonders lange Schutzabdeckungen eignen sich die Alternativen gemäß den Ansprüchen 3 und 4.

Während bei breiteren Schutzabdeckungen gemäß Anspruch 5 aus Stabilitätsgründen auch entsprechend breiter wirksame Angriffsstellen des Positionierantriebs sinnvoll sind, genügen bei besonders schmalen Schutzabdeckungen, also auch solchen ohne Scheren, gemäß Anspruch 6 punktartige Angriffsstellen.

Die weiteren Ausgestaltungen gemäß den Ansprüchen 7 und 8 haben sich in der Praxis bewährt und ermöglichen durch Koppelung der Angriffsstellen beider Abdekkungsabschnitte einer zweiteiligen Schutzabdeckung eine einfache Betriebsweise sowie eine kostengünstige Bauart.

Eine Ausbildung des Positionierantriebs als mechanisches Untersetzungsgetriebe gemäß Anspruch 9 ist besonders zweckmäßig, robust und einfach sowie zuverlässig. Das gilt insbesondere auch für die diesbezüglichen Weiterbildungen der Ansprüche 10 und 11.

Die Maßnahmen von Anspruch 12 stellen eine mechanische Alternative zu den Maßnahmen gemäß den Ansprüchen 9 bis 11 dar.

Gemäß den Ansprüchen 13 bis 16 kann der Positionierantrieb je nach Anwendungsfall vielseitig ausgebildet sein, wie rein mechanisch sowie fremdenergiefrei, elektromotorisch, elektromagnetisch oder hydraulisch bzw. pneumatisch.

In weiterer Ausgestaltung kann der Positionierantrieb für mit Stabilisierungsscheren ausgerüstete Schutzabdeckungen - wie zum Beispiel Faltenbälge - eingesetzt und dabei gemäß Anspruch 17 an der Angriffsstelle einen Kreuzungsgelenkpunkt von Scherenteilen erfassen oder gemäß Anspruch 18 beidseitig von separaten bzw. getrennten Scheren umgeben sein.

Die Erfindung wird nachfolgend an zeichnerisch dargestellten Ausführungsbeispielen näher erläutert. Es zeigen:
- Fig. 1: in einer schematischen Draufsicht eine einteilige Schutzabdeckung mit einer mittigen Angriffsstelle eines Positionierantriebs,
- Fig. 2: in einer schematischen Draufsicht eine maschinenseitig mittig angetriebene zweiteilige Schutzabdeckung mit zwei getrennten Abdeckungsabschnitten, die jeweils eine mittige Angriffsstelle für je einen Positionierantrieb haben,
- Fig. 3: in einer schematischen Draufsicht eine maschinenseitig mittig angetriebene zweiteilige Schutzabdeckung mit zwei getrennten Abdeckungsabschnitten, deren mittige Angriffsstellen eine mechanisch starre und mit einem gemeinsamen Positionierantrieb gekoppelte gegenseitige Verbindung haben,
- Fig. 4: in schematischen Drauf- und Seitenansichten eine bevorzugte erste Ausführungsform einer maschinenseitig mittig angetriebenen zweiteiligen Schutzabdeckung mit zwei getrennten Abdeckungsabschnitten, deren mittige Angriffsstellen eine mechanisch starre und mit einem gemeinsamen Positionierantrieb gekoppelte gegenseitige Verbindung haben, wobei der Positionierantrieb als rein mechanisches Untersetzungsgetriebe ausgebildet ist und einen Band- oder Kettenantrieb aufweist, und
- Fig. 5: in schematischen Drauf- und Seitenansichten eine zu Fig. 4 alternative zweite Ausführungsform einer maschinenseitig mittig angetriebenen zweiteiligen Schutzabdeckung mit zwei getrennten Abdeckungsabschnitten, deren mittige Angriffsstellen eine mechanisch starre und mit einem gemeinsamen Positionierantrieb gekoppelte gegenseitige Verbindung haben, wobei der Positionierantrieb als rein mechanisches Untersetzungsgetriebe ausgebildet ist und einen Band- oder Kettenantrieb aufweist.

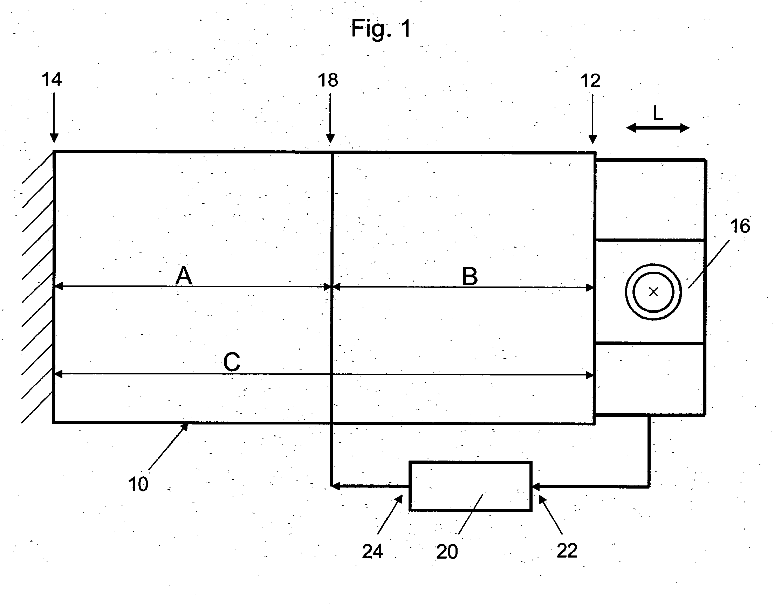

Gemäß Fig. 1 ist eine lange, schnellbewegliche, längenveränderliche Schutzabdeckung 10, die beispielsweise als Faltenbalg oder als teleskopische Metallabdeckung - jeweils mit oder ohne Scherenausstattung - ausgebildet sein kann, an ihrem in der Zeichnung rechtsseitigen Abdeckungsende 12 mit einem in Längsrichtung L maschinenseitig hin- und hergehend angetriebenen Maschinenteil 16, wie einem Maschinenschlitten einer Werkzeugbearbeitungsmaschine, antriebsmäßig verbunden und an ihrem in der Zeichnung linksseitigen Abdeckungsende 14 stationär fixiert. Im vorliegenden Beispiel ist eine sich über die volle Breite der Schutzabdeckung erstreckende und in Längsrichtung mittige Angriffsstelle 18 vorgesehen. Diese wird über einen Ausgang 24 eines schnellwirkenden separaten Positionierantriebs 20 in Längsrichtung L angetrieben. Der Eingang 22 des Positionierantriebs 20 ist im vorliegenden Fall mit dem Maschinenteil 16 und über dieses mit dem beweglichen Abdekkungsende 12 positionserfassend gekoppelt.

Das sich beispielsweise mit bis zu 120 Metern pro Minute sehr schnell hin- und herbewegende Maschinenteil 16 sorgt für ein entsprechend schnelles Verlängern bzw. Auseinanderziehen und Verkürzen bzw. Zusammenschieben der Schutzabdeckung 10. In jedem Betriebszustand wird die Position des Maschinenteils 16 über den Eingang 22 erfaßt, von dem Positionierantrieb 20 schnell verarbeitet und von diesem über seinen Ausgang 24 zur mechanisch spielfrei antreibenden Positionierung der Angriffsstelle 18 benutzt. Die Positionierung der Angriffsstelle 18 erfolgt dabei immer so, daß die Abstandsrelationen der Angriffsstelle 18 in allen Positionszuständen, und zwar unabhängig von den momentanen Bewegungs- bzw. Geschwindigkeitssituationen, konstant bleiben. Demnach bleibt das auslegungsseitig vorgegebene Verhältnis des Abstandes B oder A der definierten Angriffsstelle 18 von einem Abdeckungsende 12 oder 14 zum gegenseitigen Abstand C zwischen den Abdeckungsenden 12, 14 bewegungs- bzw. geschwindigkeitsunabhängig konstant.

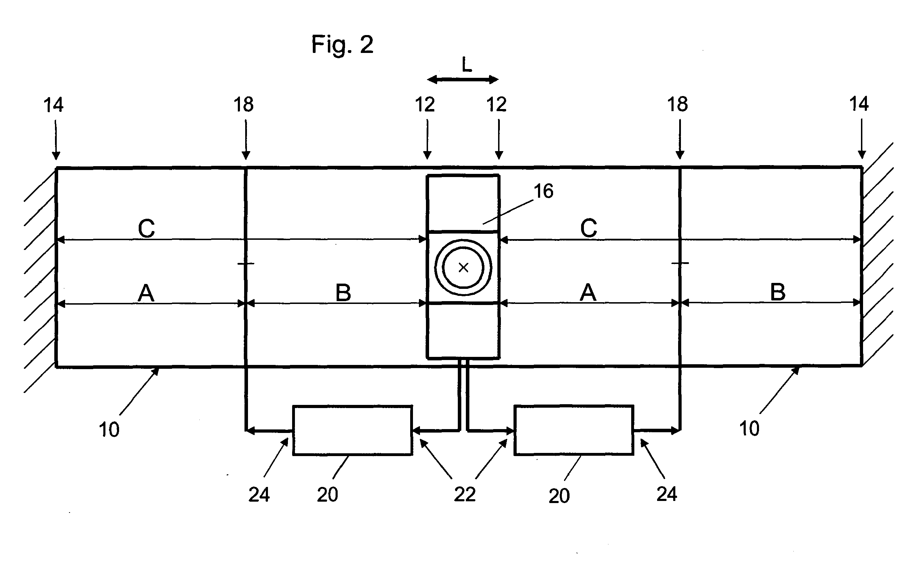

Fig. 2 zeigt eine gegenüber Fig. 1 modifizierte Ausführungsform mit einer zweiteiligen Schutzabdeckung 10. Diese hat zwei in Längsrichtung L fluchtende und im vorliegenden Fall in der dargestellten Ausgangslage gleichlange Abdeckungsabschnitte, deren benachbarte bewegliche Abdeckungsenden 12 über ein in Längsrichtung L hin- und hergehend angetriebenes Maschinenteil 16 miteinander verbunden sind. Beim Bewegen des Maschinenteils 16 werden die Abdeckungsabschnitte der Schutzabdeckung 10 entsprechend zueinander gegensinnig verlängert bzw. auseinandergezogen und verkürzt bzw. zusammengeschoben.

Jeder Abdeckungsabschnitt hat im vorliegenden Fall eine mittige, über die Breite der Schutzabdeckung 10 verlaufende Angriffsstelle 18. Im dargestellten Beispiel sind zwei getrennte separate Positionierantriebe 20 über ihre Eingänge 22 mit dem Maschinenteil 16 positionserfassend gekoppelt und über ihre Ausgänge 24 mit den Angriffsstellen 18 diese mechanisch antreibend verbunden. Auch hierbei werden die Angriffsstellen 18 so angetrieben, daß die im Zusammenhang mit Fig. 1 erläuterten Abstandsverhältnisse A/C bzw. B/C für jeden Abdeckungsabschnitt stets konstant bleiben.

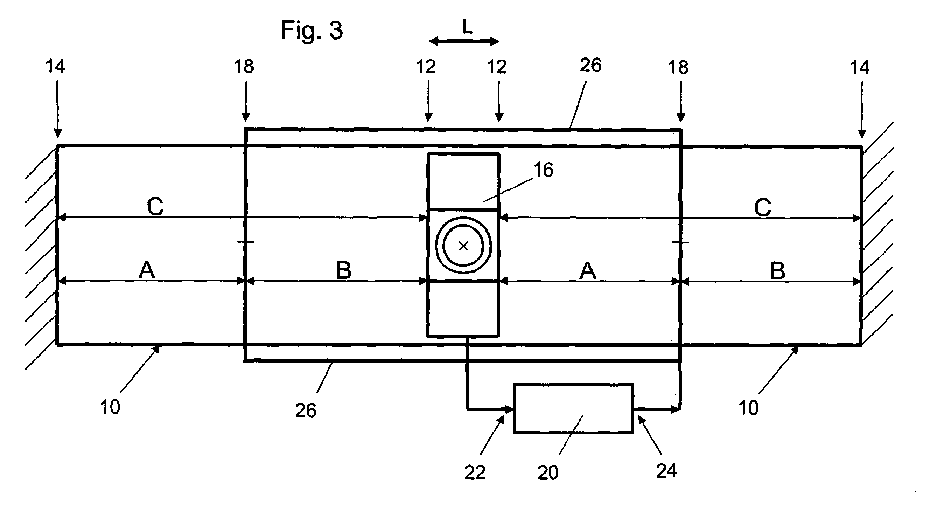

Die Ausführungsform aus Fig. 3 unterscheidet sich von derjenigen aus Fig. 2 nur dadurch, daß die jeweils mittigen Angriffsstellen 18 der beiden Abdeckungsabschnitte der zweiteiligen Schutzabdeckung 10 eine gegenseitige mechanische Verbindung 26 in Form eines starren Rahmens haben und von einem gemeinsamen Positionierantrieb 20 angetrieben werden.

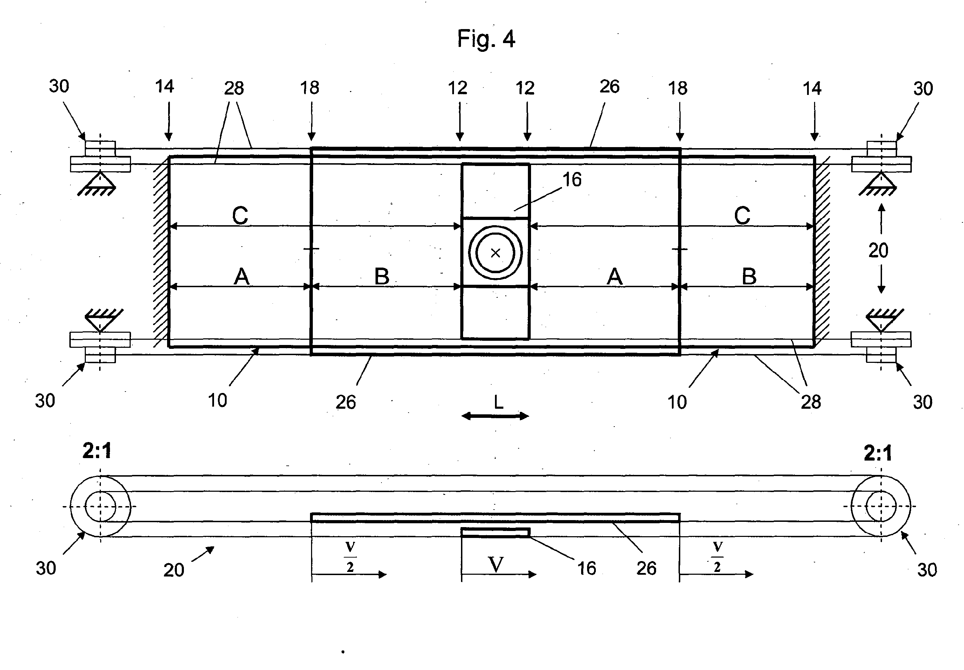

Fig. 4 zeigt eine erste konkretisierte Bauform der Ausführungsform aus Fig. 3. Hierbei ist der Positionierantrieb 20 als rein mechanisches, fremdenergiefreies, an beiden Seiten der Schutzabdeckung 10 deren Angriffsstellen 18 mechanisch antreibendes Untersetzungsgetriebe mit über durchmessermäßig abgestufte Umlenkrollen 30 umlaufenden endlosen Riemen- oder Kettengliedern 28 ausgebildet. Hierbei sind im vorliegenden Fall an jeder Seite der Schutzabdeckung 10 jeweils zwei über deren Länge verlaufende Riemen- oder Kettenglieder 28 und jeweils zwei Umlenkrollen 30 vorgesehen. Grundsätzlich würde es allerdings auch genügen, anstatt einer die Angriffstellen 18 beidseitig antreibenden Bauform nur eine diese einseitig antreibende einfachere Bauform vorzusehen.
Wie es aus Fig. 4 ersichtlich ist, verlaufen jeweils zwei endlose Riemen- oder Kettenglieder 28 über zwei abgestufte Umlenkrollen 30, deren Durchmesserbereiche dem erforderlichen Untersetzungsverhältnis entsprechend angepaßt sind. Das Maschinenteil 16 ist jeweils mit dem Riemen- oder Kettenglied 28 fest verbunden, das über den größeren Durchmesserbereich der Umlenkrollen 30 umläuft. Die als starrer Rahmen ausgebildete mechanische Verbindung 26 ist jeweils mit dem Riemen- oder Kettenglied 28 fest verbunden, das über den kleineren Durchmesserbereich der Umlenkrollen 30 entsprechend dem Untersetzungsverhältnis vergleichsweise langsamer umläuft, nämlich im Falle von mittigen Angriffsstellen 18 mit halber Geschwindigkeit des anderen Riemen- oder Kettenglied 28. Beim Hin- und Herbewegen des Maschinenteils 16 in Längsrichtung L treibt dieses das schneller umlaufende Riemen- oder Kettenglied 28 an, das über die Umlenkrollen 30 das langsamer umlaufende Riemen- oder Kettenglied 28 entsprechend dem vorgegebenen Untersetzungsverhältnis antreibt, welches seinerseits über die mechanische Verbindung 26 die Angriffsstellen 18 bewegt. Somit bleiben die Abstandsverhältnisse A/C bzw. B/C für jeden Abdeckungsabschnitt stets konstant.

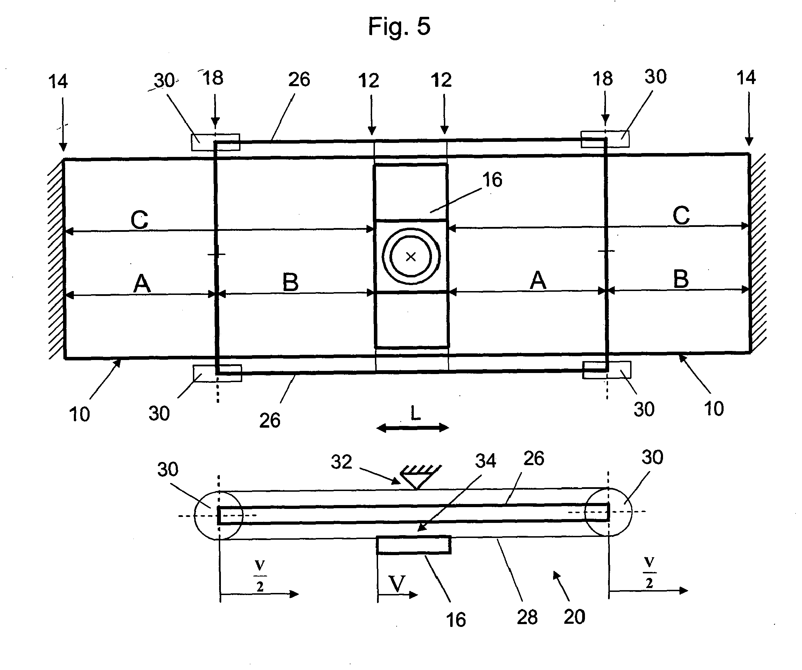

Fig. 5 zeigt eine zweite konkretisierte Bauform der Ausführungsform aus Fig. 3. Hierbei ist der Positionierantrieb 20 ebenfalls als rein mechanisches, fremdenergiefreies, an beiden Seiten der Schutzabdeckung 10 deren Angriffsstellen 18 mechanisch antreibendes Untersetzungsgetriebe mit über Umlenkrollen 30 umlaufenden endlosen Riemen- oder Kettengliedern 28 ausgebildet. Hierbei ist im vorliegenden Fall an jeder Seite der Schutzabdekkung 10 jeweils nur ein Riemen- oder Kettenglied 28 vorhanden, das über jeweils zwei Umlenkrollen 30 läuft. Die Drehachsen der Umlenkrollen 30 sind direkt mit den Angriffsstellen 18 oder indirekt über die rahmenartige starre Verbindung 26 der Angriffsstellen 18 mit diesen mechanisch verbunden. Die Längspositionen der Umlenkrollen 30 entsprechen denjenigen der Angriffsstellen 18. Grundsätzlich würde es allerdings auch bei dieser Ausführungsform genügen, anstatt einer die Angriffstellen 18 beidseitig antreibenden Bauform nur eine diese einseitig antreibende einfachere Bauform vorzusehen.

Gemäß Fig. 5 ist ein freier Trumabschnitt des Riemen- oder Kettenglieds 28 an einer ersten Anbindungsstelle 32 stationär fixiert, während der andere freie Trumabschnitt an einer zweiten Anbindungsstelle 34 direkt oder indirekt mit dem maschinenseitig angetriebenen Maschinenteil 16 verbunden ist. Die beiden Anbindungsstellen 32, 34 sind in einer neutralen Mittelstellung des maschinenseitig angetriebenen Maschinenteils 16 gemäß Fig. 5 direkt benachbart. Beim Hin- und Herbewegen des Maschinenteils 16 in Längsrichtung L werden die Umlenkrollen 30 und somit die jeweils mittigen Angriffsstellen 18 entsprechend dem gewählten Untersetzungsverhältnis mit halber Geschwindigkeit mitbewegt. Somit bleiben auch hierbei die Abstandsverhältnisse A/C bzw. B/C für jeden Abdeckungsabschnitt stets konstant.

## Patentansprüche

1. Einrichtung zur Bewegungsstabilisierung einer langen, schnellbeweglichen, längenveränderlichen Schutzabdeckung beliebiger Breite mit einem stationären Abdeckungsende und einem angetriebenen beweglichen Abdeckungsende,
**dadurch gekennzeichnet,**
**daß** die Einrichtung als ein in Längsrichtung (L) der Schutzabdeckung (10) schnellwirkender separater Positionierantrieb (20) ausgebildet ist,
**daß** der Positionierantrieb (20) eingangsseitig direkt oder indirekt mit dem angetriebenen beweglichen Abdeckungsende (12) positionserfassend gekoppelt ist,
**daß** der Positionierantrieb (20) ausgangsseitig nur mit zumindest einer zwischen den Abdeckungsenden (12, 14) der Schutzabdeckung (10) befindlichen definierten Angriffsstelle (18) derselben mechanisch antreibend direkt oder indirekt verbunden ist
und **daß** der Positionierantrieb (20) jede definierte Angriffsstelle (18) in Abhängigkeit von der jeweiligen Position des beweglichen Abdeckungsendes (12) stets so positioniert, daß das Verhältnis des Abstandes jeder definierten Angriffsstelle von einem Abdeckungsende (12;14) zum gegenseitigen Abstand zwischen den Abdeckungsenden (12, 14) bewegungs- bzw. geschwindigkeitsunabhängig konstant bleibt.

2. Einrichtung nach Anspruch 1, **dadurch gekennzeichnet, daß** der Positionierantrieb (20) ausgangsseitig mit einer mittig zwischen den Abdeckungsenden (12, 14) der Schutzabdeckung (10) befindlichen Angriffsstelle (18) verbunden ist.

3. Einrichtung nach Anspruch 1, **dadurch gekennzeichnet, daß** die Schutzabdeckung n > 1 über ihre Länge verteilte definierte Angriffsstellen (18) aufweist, die mit n > 1 Ausgängen wenigstens eines Positionierantriebs (20) mechanisch verbunden sind, der das Verhältnis des Abstandes einer jeden Angriffsstelle von einem Abdekkungssende (12; 14) zum gegenseitigen Abstand zwischen den Abdeckungsenden (12, 14) bewegungs- bzw. geschwindigkeitsunabhängig konstant hält.

4. Einrichtung nach Anspruch 3, **dadurch gekennzeichnet, daß** die Angriffsstellen (18) über die Länge der Schutzabdeckung (10) gleichmäßig verteilt sind.

5. Einrichtung nach einem der Ansprüche 1 bis 4, **dadurch gekennzeichnet, daß** der Positionierantrieb (20) ausgangsseitig an der Angriffsstelle (18) einer breiten Schutzabdeckung (10) über maximal deren gesamte Breite durchgehend oder bereichsweise mit dieser verbunden ist.

6. Einrichtung nach einem der Ansprüche 1 bis 4, **dadurch gekennzeichnet, daß** der Positionierantrieb (20) ausgangsseitig an einer Angriffsstelle (18) einer schmalen Schutzabdeckung (10) punktartig mit dieser verbunden ist.

7. Einrichtung nach einem der Ansprüche 1 bis 6 für eine zweiteilige Schutzabdekkung mit zwei in Längsrichtung fluchtenden Abdeckungsabschnitten, deren benachbarte bewegliche Abdeckungsenden (12) über ein in Längsrichtung (L) hinund hergehend angetriebenes Maschinenteil (16) verbunden sind und die jeweils wenigstens eine Angriffsstelle (18) haben, **dadurch gekennzeichnet, daß** die jeweils einander entsprechenden beiden Angriffsstellen (18) der beiden Abdekkungsabschnitte der zweiteiligen Schutzabdeckung (10) durch ein mechanisch starres Koppelglied (26) verbunden sind und daß der Positionierantrieb (20) ausgangsseitig mit diesem Koppelglied (26) oder einer der beiden Angriffsstellen (18) verbunden ist.

8. Einrichtung nach Anspruch 7, **dadurch gekennzeichnet, daß** das Koppelglied (26) als starrer Rahmen ausgebildet ist.

9. Einrichtung nach einem der Ansprüche 1 bis 8, **dadurch gekennzeichnet, daß** der wenigstens eine Positionierantrieb (20) als mechanisches Untersetzungsgetriebe mit einem linearbeweglichen mechanischen Eingang und wenigstens einem hiermit über ein konstantes Untersetzungsverhältnis gekoppelten linearbeweglichen mechanischen Ausgang ausgebildet ist.

10. Einrichtung nach Anspruch 9, **dadurch gekennzeichnet, daß** der Positionierantrieb (20) wenigstens zwei in Längsrichtung der Schutzabdeckung (10) synchronisiert sowie unterschiedlich schnell umlaufende endlose Riemen- oder Kettenglieder (28) aufweist, von denen eines direkt oder indirekt mit dem beweglichen Abdeckungsende (12) und das andere direkt oder indirekt mit der Angriffsstelle (18) der Schutzabdeckung (10) verbunden ist.

11. Einrichtung nach Anspruch 10, **dadurch gekennzeichnet, daß** die Riemen- oder Kettenglieder (28) über zwei endseitige Umlenkrollen (30) mit jeweils wenigstens zwei dem Untersetzungsverhältnis des Positionierantriebs (20) entsprechenden Durchmesserabschnitten geführt sind.

12. Einrichtung nach einem der Ansprüche 1 bis 6 für eine zweiteilige Schutzabdekkung mit zwei in Längsrichtung fluchtenden Abdeckungsabschnitten, deren benachbarte bewegliche Abdeckungsenden (12) über ein in Längsrichtung (L) hinund hergehend angetriebenes Maschinenteil (16) verbunden sind und die jeweils wenigstens eine Angriffsstelle (18) haben, **dadurch gekennzeichnet, daß** der Positionierantrieb (20) zwei Umlenkrollen (30) mit in Längsrichtung (L) konstantem gegenseitigem Achsabstand aufweist, daß die Drehachsen der Umlenkrollen (30) direkt oder indirekt mit den beiden Angriffsstellen (18) der beiden Abdekkungsabschnitte verbunden sind, daß über die Umlenkrollen (30) ein diese koppelndes endloses Riemen- oder Kettenglied (28) geführt ist, dessen einer freier Trumabschnitt an einer ersten Anbindungsstelle (32) stationär fixiert ist und dessen anderer freier Trumabschnitt an einer zweiten Anbindungsstelle (34) direkt oder indirekt mit dem angetriebenen Maschinenteil (16) verbunden ist, ist, und daß die beiden Anbindungsstellen (32, 34) in einer neutralen Mittelstellung des angetriebenen Maschinenteils (16) direkt benachbart sind.

13. Einrichtung nach einem der Ansprüche 1 bis 12, **dadurch gekennzeichnet, daß** der Positionierantrieb (20) rein mechanisch und fremdenergiefrei betrieben ausgebildet ist.

14. Einrichtung nach einem der Ansprüche 1 bis 12, **dadurch gekennzeichnet, daß** der Positionierantrieb (20) elektromotorisch ausgebildet ist.

15. Einrichtung nach einem der Ansprüche 1 bis 12, **dadurch gekennzeichnet, daß** der Positionierantrieb (20) elektromagnetisch ausgebildet ist.

16. Einrichtung nach einem der Ansprüche 1 bis 12, **dadurch gekennzeichnet, daß** der Positionierantrieb (20) hydraulisch oder pneumatisch ausgebildet ist.

17. Einrichtung nach einem der Ansprüche 1 bis 16 für mit wenigstens einer Stabilisierungsschere ausgerüstete Schutzabdeckungen, wie Faltenbälge, **dadurch gekennzeichnet, daß** der Positionierantrieb (20) ausgangsseitig mit einer durch einen Kreuzungsgelenkpunkt von sich kreuzenden Scherenteilen verlaufenden Angriffsstelle (18) verbunden ist.

18. Einrichtung nach einem der Ansprüche 1 bis 16 für mit Stabilisierungsscheren ausgerüstete Schutzabdeckungen, wie Faltenbälge, **dadurch gekennzeichnet, daß** der Positionierantrieb (20) mit einer zwischen getrennten Stabilisierungsscheren befindlichen Angriffsstelle (18) verbunden ist.
